# EUROPÄISCHE PATENTANMELDUNG

(11) **EP 0 935 032 A2**
(43) Veröffentlichungstag der Anmeldung: **11.08.1999**
(21) Anmeldenummer: 98124637.4
(22) Anmeldetag: 23.12.1998
(51) Int. Cl.: E04C 2/26, E04C 2/04

(54) **Monolithische Bauplatte auf Zementbasis**

(30) Priorität: 04.02.1998 DE 19804325
(71) Anmelder: Deutsche Perlite GmbH, 44147 Dortmund (DE)
(72) Erfinder: Knauf, Albrecht Dr., 58730 Fröndenberg (DE); Stelmach, Tadeus Dr., 58313 Herdecke (DE)
(74) Vertreter: Becker, Thomas, Dr., Dipl.-Ing.

(57) **Zusammenfassung**

Die Erfindung betrifft eine monolithische Bauplatte auf Zementbasis, mit einer Kernschicht aus hydratisiertem Zement und Zuschlag, auf deren beiden Hauptoberflächen Deckschichten auf Zementbasis mit integriertem Armierungsgewebe angeordnet sind, dadurch gekennzeichnet, daß zumindest die hydratisierten Zementanteile der Kernschicht hydrophobiert sind und die nach 24 Stunden durch Kapillarkräfte aufgenommene Wassermenge kleiner 1,0 kg/m² beträgt.

## Beschreibung

Die Erfindung betrifft eine monolithische Bauplatte auf Zementbasis.

Eine solche Bauplatte ist aus der US 3,284,980 A bekannt. Sie besteht aus einer Kernschicht aus hydratisiertem Zement und einem Leichtzuschlag, auf deren beiden Hauptoberflächen Deckschichten auf Zementbasis mit integriertem Armierungsgewebe angeordnet sind. Das Armierungsgewebe soll dabei so ausgewählt werden, daß es eine Wasseraufnahme verhindert.

Trotz dieser Auswahl eines speziellen Gewebes sowie der Verwendung eines hydraulischen Zements als Matrixmaterial für die Bauplatte ergeben sich bei der Anwendung verschiedene Probleme.

Zur Herstellung ist es notwendig, Wasser im Überschuß bereitzustellen, das heißt, nicht unerhebliche Wasseranteile werden nicht in den Hydratphasen des Zementes gebunden, sondern verbleiben als 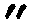 freies Wasser" in der Platte. Dies führt zum Problem der Schwindung (Grünschwindung) beim Trocknen. Mit der Schwindung kann es zur Bildung von Schwindungsrissen kommen.

Umgekehrt besitzt eine solche Platte (auch und gerade nach einer mehr oder weniger vollständigen Trocknung) eine nicht unerhebliche Wasseraufnahmekapazität, die größenordnungsmäßig bei 15 bis 20 Gew.-% liegt. Bei der Wasseraufnahme kommt es zu einem unerwünschten Quellen der Platten.

Bauplatten der genannten Art stellen eine Weiterentwicklung der seit langem bekannten Bauplatten auf Gipsbasis dar. Diese können jedoch nur in Trockenräumen Verwendung finden.

Die in der US 3,284,980 A beschriebene Zement-Bauplatte ist dagegen auch für Feuchträume geeignet. Sie kann mit üblichen Boden- oder Wandbelägen, beispielsweise Tapeten oder Fliesen, verkleidet werden.

Abgesehen davon, daß zum Beispiel beim Aufbringen von Fliesen wasserhaltige Mörtel oder Kleber verwendet werden, über die, insbesondere über Kapillarkräfte, Feuchtigkeit in die dahinterliegende Zement-Bauplatte gesaugt wird, besteht bei den genannten Anwendungen auch die Gefahr, daß durch Undichtigkeiten im Fliesenbelag, undichte Wasserleitungen oder dergleichen, Feuchtigkeit hinter den Fliesenbelag und damit in den Bereich der Zementplatten eindringt.

Kommt es dann zu dem genannten Quellen der Zementplatten, kann dies soweit gehen, daß Dehnungsrisse entstehen, die nicht nur die Qualität der Zement-Bauplatte beeinträchtigen, sondern auch den darauf zum Beispiel aufgebrachten Fliesenbelag zerstören.

Dies gilt gleichermaßen für die nach dem Verfahren gemäß DE 29 10 432 C2 hergestellten Zement-Bauplatten.

Der Erfindung liegt insoweit die Aufgabe zugrunde, eine zementgebundene Bauplatte anzubieten, die auch unter Feuchtigkeitseinfluß beständig bleibt.

Ausgehend von der eingangs beschriebenen Erkenntnis, daß auch hydratisierte, Zementgebundene Bauplatten schwinden und quellen können, besteht der Kerngedanke der Erfindung darin, die Platte dahingehend zu beeinflussen, daß ein Wasserzutritt - insbesondere auch im verarbeiteten Zustand der Platte - verhindert oder reduziert wird.

Eine Abdichtung im Sinne einer dichten Deckschicht, zum Beispiel auf Bitumen- oder Silikonbasis, würde diese Aufgabe zwar erfüllen; eine solche Abdichtung ist jedoch teuer und erfordert mindestens einen zusätzlichen Arbeitsschritt bei der Herstellung und/oder Verlegung. Auch die Hafteigenschaften einer solchen Abdichtung sind nicht immer unproblematisch, was insbesondere dann von Bedeutung ist, wenn zum Beispiel Fliesen auf der Bauplatte verlegt werden sollen.

Der erfindungsgemäße Vorschlag geht einen anderen Weg, nämlich zumindest die hydratisierten Zementanteile der Kernschicht hydrophob zu machen und zwar derart, daß die kapillare Wasseraufnahme gegenüber den genannten konventionellen Zement-Bauplatten drastisch reduziert wird.

Die Hydrophobierung kann während der Herstellung der Bauplatte erfolgen; ein separater Verfahrensschritt entfällt. Die Hydrophobierung hat den Vorteil, daß ein Ionentransport insbesondere innerhalb der Zement-Matrix, unterdrückt beziehungsweise verhindert wird.

Auf diese Weise wird das Schwind-/Quellverhalten der Platte sehr günstig beeinflußt. Auch wird ein Alkali-Angriff auf das zum Beispiel aus Glasfasern bestehende Armierungsgewebe gleichzeitig unterdrückt.

Dabei hat es sich als ausreichend herausgestellt, lediglich die Kernschicht und hier vor allem den hydratisierten Zementanteil zu hydrophobieren. Durch gemeinsames Mischen der Komponenten für die Kernschicht, also den Zement, den Zuschlag und das Wasser (neben dem Hydrophobierungsmittel) kommt es in der Regel jedoch auch zu einer Hydrophobierung des Zuschlages, der die positiven Eigenschaften der erfindungsgemäßen Bauplatte verstärkt.

Eine Hydrophobierung der meist sehr dünnen Deckschichten ist nicht zwingend notwendig. Dies liegt zum einen daran, daß die Deckschichten in der Regel sehr dünn sind und ihre Dicke eher durch die Dicke des Armierungsgewebes als die das Gewebe umgebende Zementmatrix bestimmt wird. Üblicherweise sind Deckschichten deshalb nicht dicker als 0,5 bis 2 mm.

Ist die Kernschicht hydrophobiert, könnte Feuchtigkeit (Wasser) zwar in die Deckschicht eindringen; die Hydrophobierung verhindert jedoch einen Weitertransport in das Innere der Bauplatte und das Armierungsgewebe behindert einen Feuchtigkeitstransport parallel zur Deckfläche so weitgehend, daß auch bei unhydrophobierter Deckfläche(n) gute Ergebnisse erzielt wurden. Vorteilhaft ist dabei vor allem, daß die Zement-Deckschicht(en) sehr einfach auf konventionelle Weise mit einem Putz, Fliesen oder anderen Belägen verkleidet werden kann (können).

Nach einer Ausführungsform können jedoch eine oder beide Deckflächen ebenfalls hydrophobiert sein, zumindest bezüglich ihres hydratisierten Zementanteils.

Die kapillare Wasseraufnahme ist auf Werte < 1 kg/m² begrenzt. Sie liegt damit um etwa 50 % unterhalb der einer konventionellen Zement-Bauplatte.

Nach einer Ausführungsform liegt der Wert der kapillaren Wasseraufnahme unter 0,5 kg/m². Durch Auswahl bestimmter Hydrophobierungsmittel kann die kapillare Wasseraufnahme weiter auf Werte beispielsweise < 0,1 kg/m², ja sogar auf Werte < 0,05 kg/m² reduziert werden.

Die zuletzt genannten Werte wurden in Vorversuchen insbesondere mit Hydrophobierungsmitteln erreicht, die in chemische Wechselwirkung mit den Zementanteilen treten. Auf diese Weise findet keine reine physikalische Oberflächenbelegung statt; vielmehr kommt es durch chemische Reaktion zwischen dem Hydrophobierungsmittel und den Zementbestandteilen zur Phasenneubildung, beispielsweise zur Bildung von Metallseifen, die die kapillare Wasseraufnahme der Bauplatte auf solche Werte, beispielsweise < 0,1 kg/m², herabdrückt, die um den Faktor 20 geringer sind als die konventioneller Bauplatten auf Zementbasis.

In den nachfolgenden Ausführungsbeispielen werden dazu noch ergänzende Hinweise gegeben.

So haben sich beispielsweise Metallstearate wie Zinkstearat, Calciumstearat, Aluminiumstearat oder Mischungen daraus ebenso wie verschiedene Oleate, beispielsweise Natriumoleat, als hervorragende Hydrophobierungsmittel herausgestellt.

Die hydrophobierende Wirkung von Natriumoleat beruht maßgeblich auf der zeitverzögerten Bildung von Calciumseifen mit den alkalischen Bestandteilen der Zementmatrix.

Die eingesetzte Menge an Hydrophobierungsmittel hängt von dem gewünschten Wert der maximalen kapillaren Wasseraufnahme ab. Üblicherweise genügen jedoch Anteile deutlich unter 1,0 Gew.-%, bezogen auf die Masse der zu hydrophobierenden festen Bestandteile der Kernschicht.

Bauplatten der genannten Art werden üblicherweise wandoder bodenseitig befestigt, beispielsweise verdübelt, so daß die statischen Eigenschaften eher von ungeordneter Bedeutung sind. Dies ermöglicht es, Leichtzuschläge wie Perlit, Vermiculit, insbesondere in geblähter Form, Blähschiefer, Schaumglas oder Mischungen daraus einzusetzen. Die Korngröße des Zuschlags richtet sich nach der Größe der Bauplatte und wird üblicherweise < 5 mm, meist < 2 mm betragen.

Während die Zementmatrix aus üblichen hydraulischen Zementen wie CEM 42,5 bestehen kann, eignen sich als Armierungsgewebe beispielsweise Glasfasergewebe, beispielsweise mit einem Flächengewicht zwischen 100 und 150 g/m².

Die aus sogenanntem E-Glas bestehenden Glasfasergewebe können mit einer zusätzlichen alkaliresistenten Beschichtung, beispielsweise einer Kunststoff-Beschichtung versehen sein.

Der Zementanteil der Deckschicht dient in erster Linie dazu, das Glasfasergewebe gegenüber der Kernschicht 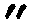 zu halten", so daß der Zementanteil relativ gering sein kann und üblicherweise zwischen 35 und 55 Gew. -% der Deckschicht beträgt.

Die Herstellung der beschriebenen Bauplatten kann beispielsweise gemäß US 3,284,980 A oder DE 29 10 432 C2 erfolgen.

Eine wirksame Einbindung und Verteilung des Hydrophobierungsmittels läßt sich vor allem dann erreichen, wenn vor allem die Kernschicht mit relativ geringen Wasseranteilen verarbeitet wird. Im Gegensatz zum sogenannten Hatschek-Verfahren, bei dem mit hohen Wasserüberschüssen gearbeitet wird, schafft die Verarbeitung von mehr oder weniger erdfeuchten Zementmassen die Möglichkeit, das Hydrophobierungsmittel an den Korngrenzen der Zementbestandteile zu halten. Bei Wasserüberschuß würde das Hydrophobierungsmittel zu erheblichen Teilen mit dem Überschußwasser wieder weggeführt und damit seine Wirkung verlieren.

Weitere Merkmale der Erfindung ergeben sich aus den Merkmalen der Unteransprüche sowie den sonstigen Anmeldungsunterlagen.

Die Erfindung wird nachstehend anhand verschiedener Ausführungsbeispiele näher beschrieben.

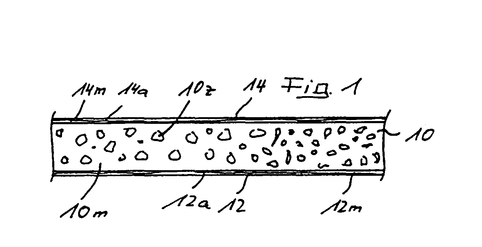

Hergestellt wurden jeweils zementgebundene Bauplatten mit einem Aufbau (Schnittansicht) gemäß Figur 1. Gemäß Figur 1 besteht jede Platte aus einer Kernschicht 10 mit einer Zementmatrix 10m und darin eingebetteten Zuschlagkörnern 10z aus gebrochenem Blähton der Korngröße < 2 mm.

Beidseitig ist die Kernschicht 10 mit je einer Deckschicht 12, 14 belegt, welche jeweils aus einer Zementmatrix 12m, 14m mit darin einliegender Armierung 12a, 14a aus einem Glasfasergewebe besteht. Aus jeweils 600 kg Zuschlag, 400 kg Zement CEM 42,5 und 200 l Wasser wurden erdfeuchte Mischungen für die Kernschicht 10 hergestellt, die 0-Probe ohne weitere Zusätze, die Probe N1 unter Zugabe von 0,2 Gew.-% Natriumoleat und die Probe C1 unter Zugabe von 0,2 Gew. -% Calciumstearat, wobei die Gew. -%-Angaben auf den Zementanteil bezogen sind.

Die Herstellungstechnik war wie folgt:

Auf ein in eine Zementschlämme eingebettetes Glasfasergewebe mit einer Maschenweite von 3 mm wurde die Kernschicht-Mischung in einer Stärke von 10 mm aufgetragen und danach mit einer weiteren Deckschicht analog der ersten Deckschicht abgedeckt. Die Platten wurden danach auf das Maß 2.500 x 900 mm geschnitten.

Gemessen wurde die Wasseraufnahme an lagerfeuchten, 7 Tage alten Platten, wobei die Wasseraufnahme im Tauchverfahren (vollständiges Eintauchen der Platten in Wasser) ermittelt wurde (gemäß DIN 52617).

Die Wasseraufnahme der 0-Probe betrug 17 Gew. -% und konnte bei den Proben N1 beziehungsweise C1 auf 5 beziehungsweise 8 Gew. -% reduziert werden.

Weiter bestimmt wurden die Werte der kapillaren Wasseraufnahme, ebenfalls bestimmt an lagerfeuchten, 7 Tage alten Platten in einer Versuchsanordnung gemäß DIN 52617. Die Plattenränder wurden dabei mit Silikon abgedichtet.

Während die 0-Probe nach 24 Stunden eine kapillare Wasseraufnahme von 1,9 kg/m² zeigte, konnte dieser Wert bei der Probe N1 auf 0,07 und bei der Probe C1 auf 0,19 kg/m² gesenkt werden.

Schließlich wurde noch die Biegezugfestigkeit im DreipunktBiegeversuch bei einer Stützweite von 400 mm bestimmt.

Dabei ergab sich für die 0-Probe eine Rißspannung von 3,4 N/mm² und eine Bruchspannung von 8,3 N/mm².

Diese Werte konnten bei den Proben N1 auf 4,5 beziehungsweise 10,0 und bei der Probe C1 auf 4,0 beziehungsweise 11,2 N/mm² verbessert werden.

Insgesamt ergeben sich damit hinsichtlich der Wasseraufnahme, insbesondere kapillaren Wasseraufnahme, wie sie bei der Anwendung von wesentlicher Bedeutung ist, charakteristische Vorteile für die erfindungsgemäße Bauplatte, bei gleichzeitig gesteigerter Biegezugfestigkeit.

## Patentansprüche

1. Monolithische Bauplatte auf Zementbasis, mit einer Kernschicht aus hydratisiertem Zement und Zuschlag, auf deren beiden Hauptoberflächen Deckschichten auf Zementbasis mit integriertem Armierungsgewebe angeordnet sind, dadurch gekennzeichnet, daß zumindest die hydratisierten Zementanteile der Kernschicht hydrophobiert sind und die nach 24 Stunden durch Kapillarkräfte aufgenommene Wassermenge kleiner 1,0 kg/m² beträgt.

2. Bauplatte nach Anspruch 1, bei der zumindest der hydratisierte Zementanteil einer der Deckschichten hydrophobiert ist.

3. Bauplatte nach Anspruch 1, bei der zumindest der hydratisierte Zementanteil beider Deckschichten hydrophobiert ist.

4. Bauplatte nach Anspruch 1, bei der der hydratisierte Zementanteil durch chemische Reaktion hydrophobiert ist.

5. Bauplatte nach Anspruch 1, bei der die nach 24 Stunden durch Kapillarkräfte aufgenommene Wassermenge kleiner 0,5 kg/m² beträgt.

6. Bauplatte nach Anspruch 1, bei der die nach 24 Stunden durch Kapillarkräfte aufgenommene Wassermenge kleiner 0,1 kg/m² beträgt.

7. Bauplatte nach Anspruch 1, bei der die nach 24 Stunden durch Kapillarkräfte aufgenommene Wassermenge kleiner 0,05 kg/m² beträgt.

8. Bauplatte nach Anspruch 1 mit einer Wasseraufnahme nach 24 Stunden kleiner 10 Gew.-%.

9. Bauplatte nach Anspruch 1 mit einer Wasseraufnahme nach 24 Stunden kleiner 5 Gew.-%.

10. Bauplatte nach Anspruch 1, bei der der hydrophobierte Zementanteil einen Seifenanteil enthält.

11. Bauplatte nach Anspruch 10, bei der der hydrophobierte Zementanteil einen Metallseifenanteil enthält.

12. Bauplatte nach Anspruch 10 mit einem Seifenanteil aus Natriumstearat, Natriumoleat oder einem Gemisch daraus.

13. Bauplatte nach Anspruch 11 mit einem Metallseifenanteil aus Zinkstearat, Aluminiumstearat, Calciumstearat oder einem Gemisch daraus.

14. Bauplatte nach Anspruch 1 mit einem Leichtzuschlag in der Kernschicht.

15. Bauplatte nach Anspruch 14, bei der der Leichtzuschlag aus Blähton, Blähschiefer, Blähperlit, Schaumglas, Vermiculit oder Mischungen daraus besteht.

16. Bauplatte nach Anspruch 1, hergestellt durch Aufbringen einer Mischung aus Zement, Zuschlag, Hydrophobierungsmittel und Wasser in einer vorwählbaren Schichtstärke auf ein in eine Zementschlämme eingelegtes Fasergewebe, anschließendes Abdecken der so gebildeten Kernschicht mit einem weiteren, in eine Zementschlämme eingelegten Fasergewebe und Ablängen nach einer vorwählbaren Zeit auf ein gewünschtes Plattenmaß.
